# EUROPÄISCHE PATENTSCHRIFT

(11) **EP 3 687 878 B1**
(45) Veröffentlichungstag und Bekanntmachung des Hinweises auf die Patenterteilung: **12.01.2022**
(21) Anmeldenummer: 18779286.6
(22) Anmeldetag: 19.09.2018
(51) Int. Cl.: B61H 7/08, H01R 11/28, H01R 11/12

(54) **MAGNETSCHIENENBREMSVORRICHTUNG MIT AN EINER FREIEN OBERFLÄCHE ANGEORDNETEM ANSCHLUSSKÖRPER EINER ELEKTRISCHEN ANSCHLUSSEINRICHTUNG**
ELECTROMAGNETIC RAIL BRAKE DEVICE WITH A CONNECTOR BODY OF AN ELECTRIC CONNECTOR DEVICE, WHICH CONNECTOR BODY IS ARRANGED ON A FREE SURFACE
DISPOSITIF DE FREINAGE SUR RAIL ÉLECTROMAGNÉTIQUE COMPRENANT UN CORPS DE RACCORDEMENT D'UN DISPOSITIF DE RACCORDEMENT ÉLECTRIQUE, DISPOSÉ SUR UNE SURFACE LIBRE

(30) Priorität: 29.09.2017 DE 102017009157
(43) Veröffentlichungstag der Anmeldung: 05.08.2020
(73) Patentinhaber: Knorr-Bremse Gesellschaft mit beschränkter Haftung, 2340 Mödling (AT)
(72) Erfinder: KASSAN, Michael, 2751 Steinabrückl (AT); KOIDL, Hermann, 1140 Wien (AT)
(74) Vertreter: Wiedemann, Markus
(86) Internationale Anmeldenummer: PCT/EP2018/075265
(87) Internationale Veröffentlichungsnummer: WO 2019/063366

(56) Entgegenhaltungen:
- WO-A1-2005/100122
- DE-A1-102012 007 967
- DE-A1-102014 208 112
- US-A- 1 914 998

## Beschreibung

Die vorliegende Erfindung betrifft eine Magnetschienenbremsvorrichtung eines Schienenfahrzeugs gemäß dem Oberbegriff von Anspruch 1 sowie ein Schienenfahrzeug mit einer solchen Magnetschienenbremsvorrichtung gemäß Anspruch 9.

Die krafterzeugende Hauptkomponente einer elektrischen Magnetschienenbremsvorrichtung ist der Bremsmagnet. Er ist im Prinzip ein Elektromagnet, bestehend aus einer sich in Schienenrichtung erstreckenden, von einem Magnetspulenkörper getragenen Magnetspule und einem hufeisenförmigen Magnetkern. Der hufeisenförmige Magnetkern bildet an seiner der Fahrzeugschiene zugewandten Seite Polschuhe aus. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet mit seinen Polschuhen auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremsvorrichtung über Mitnehmer entlang der Schiene gezogen. Hierbei entsteht durch die Gleitreibung zwischen Bremsmagnet und Schiene in Verbindung mit der magnetischen Anziehungskraft eine Bremskraft.

Prinzipiell kann man nach dem konstruktiven Aufbau zwei verschiedene Arten von Magnetschienenbremsvorrichtungen unterscheiden.

Zum einen kann die Magnetschienenbremsvorrichtung eine Starrmagnetschienenbremsvorrichtung sein, bei welcher die Bremsmagneten Starrmagneten sind, wobei ein Bremsmagnet einen Magnetspulenkörper aufweist, welcher mit zwei Teilen eines Magnetkerns verschraubt ist, welche im Bereich der Polschuhe ihrer Schenkel in dem Spalt durch einen Zwischenkörper aus unmagnetischem Material in Längsrichtung getrennt sind. Das unmagnetische Material des Zwischenkörpers dient zur Vermeidung eines magnetischen Kurzschlusses zwischen den Polschuhen. Starrmagnetschienenbremsvorrichtungen werden meist im Nahverkehr bei Straßen- und Stadtbahnen eingesetzt.

Weiterhin sind die hier in Frage stehenden Gliedermagnetschienenbremsvorrichtungen mit Gliedermagneten als Bremsmagneten bekannt, bei welchen der Magnetspulenkörper Trennwände und dazwischen angeordnete Kammern aufweist. In den Kammern zwischen den Trennwänden sind Magnetkerne begrenzt beweglich gehalten, die sich während des Bremsvorgangs ausrichten, um Unebenheiten am Schienenkopf besser folgen zu können. In diesem Fall sind die Polschuhe an den der Schiene zugewandten Stirnflächen der Magnetkerne der Zwischenglieder ausgebildet. Gliedermagnetschienenbremsvorrichtungen werden standardmäßig im Vollbahnbereich eingesetzt.

Die Größe der Bremskraft einer Magnetschienenbremsvorrichtung ist u.a. vom magnetischen Fluss des Magnetkreises, d.h. auch von der Geometrie des Magnetkerns oder Magnetkerne, der magnetischen Durchflutung und den Reibverhältnissen zwischen Bremsmagnet und Schiene abhängig.

Eine Magnetschienenbremsvorrichtung, die dort als Gliedermagnetschienenbremsvorrichtung ausgeführt ist, wird in der bisher unveröffentlichten DE 10 2017 006 736.8 beschrieben. Dort ist an einem Endglied eines Magnetkerns eine elektrische Anschlusseinrichtung für ein elektrisches Kabel angeordnet, durch welche die Magnetspulenwicklung stromversorgt wird. Die elektrische Anschlusseinrichtung weist dort jeweils in einer Ausnehmung an einer Seitenfläche des Endglieds einen dann innerhalb der Ausnehmung angeordneten zapfenförmigen elektrischen Anschluss auf, an welche jeweils ein elektrisches Kabel für den Pluspol und für den Minuspol angeschlossen ist. Die elektrischen Kabel werden jeweils über eine Bohrung in dem Endglied an den jeweiligen in der Ausnehmung angeordneten zapfenförmigen elektrischen Anschluss herangeführt, wobei die Bohrung in einer der von der Schiene weg weisenden Oberfläche des Endglieds ausgebildet ist und in die Ausnehmung mündet. Dadurch ist die elektrische Anschlusseinrichtung relativ komplex aufgebaut. Außerdem ist ein Abtrennen der beiden elektrischen Kabel von den innen liegenden zapfenförmigen elektrischen Anschlüssen relativ aufwändig.

Eine gattungsgemäße Magnetschienenbremsvorrichtung wird in WO 2005/100122 A1 beschrieben. Dort ist ein Anschlusskasten mit zwei Anschlüssen für elektrische Anschlusskabel an einer Stirnfläche eines Endstücks der Magnetschienenbremse vorhanden, wobei die elektrischen Anschlussverbindungen für die Anschlusskabel im Inneren des Anschlusskastens angeordnet sind. US 1 914 998 A offenbart eine auf einen Anschlusszapfen geklemmte Polklemme, welche mit einem elektrischen Anschlusskabel verbunden ist, zum Anschließen an eine Autobatterie. DE 10 2012 007 967 A1 offenbart einen Kabelschuh zur elektrischen Anbindung einer Masseleitung an eine Fahrzeugkarosserie eines Kraftfahrzeugs, wobei am Kabelschuh eine Schraube angeordnet ist, die in einen Massebolzen des Kraftfahrzeugs eindrehbar ist. DE 10 2014 208 112 A1 beschreibt eine Spulenvorrichtung für eine elektromagnetische Schienenbremse.

Demgegenüber liegt die Aufgabe der Erfindung darin, eine Magnetschienenbremsvorrichtung derart weiterzubilden, dass die Kontaktierung der elektrischen Anschlüsse für die Magnetspule einfacher und besser zugänglich zu handhaben ist. Weiterhin soll auch ein Schienenfahrzeug mit einer solchen Magnetschienenbremsvorrichtung zur Verfügung gestellt werden.

Diese Aufgabe wird durch die in den Patentansprüchen 1 und 9 gekennzeichneten Vorrichtungen gelöst.

Weitere vorteilhafte Ausgestaltungen und Weiterbildungen der Erfindung ergeben sich aus den abhängigen Ansprüchen.

### Offenbarung der Erfindung

Die Erfindung geht aus von einer Magnetschienenbremsvorrichtung eines Schienenfahrzeugs, mit wenigstens einem Bremsmagneten, welcher einen Magnetspulenkörper sowie wenigstens einen Magnetkern aufweist und wobei der Magnetspulenkörper wenigstens eine Magnetspulenwicklung trägt, sowie mit einer elektrischen Anschlusseinrichtung, durch welche die wenigstens eine Magnetspulenwicklung stromversorgt wird, wobei die elektrische Anschlusseinrichtung wenigstens einen zapfenförmigen Anschlusskörper aufweist und mit wenigstens einem stromführenden elektrischen Kabel über eine lösbare Verbindung verbunden ist, welches dem zapfenförmigen Anschlusskörper in Bezug auf den Bremsmagneten von außen zugeführt ist, wobei der wenigstens eine zapfenförmige Anschlusskörper an einer freien und außen liegenden Oberfläche des Magnetspulenkörpers oder eines mit dem Magnetspulenkörper verbundenen Elements angeordnet ist. Insbesondere befindet sich die freie und außen liegenden Oberfläche, von welcher der wenigstens eine zapfenförmige Anschlusskörper nach außen weg ragt, außerhalb von etwaigen Ausnehmungen, Bohrungen oder Öffnungen des Magnetspulenkörpers oder des mit dem Magnetspulenkörper verbundenen Elements. Mit anderen Worten ist der wenigstens eine zapfenförmige Anschlusskörper an der freien und außen liegenden Oberfläche des Magnetspulenkörpers oder des mit dem Magnetspulenkörper verbundenen Elements derart angeordnet, dass er von außen frei zugänglich ist.

Insgesamt können beispielsweise zwei stromführende elektrische Kabel vorhanden sein, ein erstes elektrisches Kabel als Pluspol und ein zweites elektrisches Kabel als Minuspol, wobei das den Pluspol repräsentierende erste elektrische Kabel über eine erste lösbare Verbindung an einen ersten zapfenförmigen elektrischen Anschlusskörper und das zweite den Minuspol repräsentierende elektrische Kabel über eine zweite lösbare Verbindung an einen zweiten zapfenförmigen elektrischen Anschlusskörper lösbar anschlossen ist. Insbesondere können die beiden zapfenförmigen elektrischen Anschlusskörper identisch ausgeführt sein.

Der wenigstens eine zapfenförmige Anschlusskörper hat beispielsweise einen kreisförmigen Querschnitt.

Der wenigstens eine zapfenförmige elektrische Anschlusskörper wird durch eine Kopfschraube gebildet, welche in eine Gewindebohrung einer in Bezug auf den Magnetspulenkörper oder das mit ihm verbundene Element elektrisch isolierten Gewindebuchse einschraubbar ist, welche in einer Bohrung in der freien und außen liegenden Oberfläche gehalten ist, wobei ein Schraubenschaft der Kopfschraube durch einen als Kabelschuh ausgebildeten Polkontakt ragt, an welchen das wenigstens eine stromführende elektrische Kabel elektrisch angeschlossen ist. Dann kann die elektrische lösbare Verbindung lediglich durch Lösen der Schraubverbindung zwischen der Kopfschraube und der Gewindebohrung gelöst werden.

Der Zweck des wenigstens einen zapfenförmigen elektrischen Anschlusskörpers liegt daher darin, elektrische Energie oder elektrischen Strom von dem stromführenden elektrischen Kabel über die elektrische lösbare Verbindung in den wenigstens einen zapfenförmigen elektrischen Körper einzuleiten, welcher mit der Magnetspule in elektrisch leitender Verbindung steht, um diese dann zu bestromen.

Der Vorteil der Erfindung liegt dann darin, dass die lösbare elektrische Verbindung zwischen dem wenigstens einen zapfenförmigen elektrischen Anschlusskörper und einem Polkontakt, welcher beispielsweise an einem Ende des wenigstens einen stromführenden elektrischen Kabels angeordnet ist, frei zugänglich ist und daher schnell und einfach verbunden und gelöst werden kann. Auch Reparaturen an der lösbaren elektrischen Verbindung bzw. an dem wenigstens einen zapfenförmigen elektrischen Anschlusskörper sind dann auf einfache Weise möglich.

Durch die in den Unteransprüchen aufgeführten Maßnahmen sind vorteilhafte Weiterbildungen und Verbesserungen der in Anspruch 1 angegebenen Erfindung möglich.

Eine besonders gute Zugänglichkeit des wenigstens einen zapfenförmigen elektrischen Anschlusskörpers ist gegeben, wenn dieser senkrecht von der freien und außen liegenden Oberfläche weg ragt.

Bei der Magnetschienenbremsvorrichtung kann insbesondere an den Längsenden des Magnetspulenkörpers jeweils ein Endglied starr mit dem Magnetspulenkörper verbunden sein, wobei der wenigstens eine zapfenförmige Anschlusskörper an einer freien und außen liegenden Oberfläche des Endglieds angeordnet ist.

Die Oberfläche kann generell eine Flächennormale aufweisen, welche senkrecht oder parallel zur Schiene angeordnet ist und in Gebrauchslage gesehen oben, unten, seitlich oder stirnseitig an dem Magnetspulenkörper oder an dem mit diesem verbundenen Element angeordnet sein.

Insbesondere kann die freie und außen liegende Oberfläche eine von der Schiene weg und in Gebrauchslage vertikal nach oben weisende Oberfläche sein. Dann ist die lösbare Verbindung von oben her leicht zugänglich. Alternativ kann die Oberfläche aber auch stirnseitig oder seitlich an dem Magnetspulenkörper oder an dem mit diesem verbundenen Element angeordnet sein.

Insbesondere kann auch die Magnetschienenbremsvorrichtung als eingangs beschriebene Starrmagnetschienenbremsvorrichtung oder als eingangs beschriebene Gliedermagnetschienenbremsvorrichtung ausgeführt sein.

Die Erfindung betrifft auch ein Schienenfahrzeug mit einer hierin beschriebenen Magnetschienenbremsvorrichtung.

Im Rahmen der Erfindung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Vorzugsweise ist dann eine hierin beschriebene Magnetschienenbremsvorrichtung an einem Drehgestell vertikal stellbar aufgehängt.

Die Erfindung wird nun mit Bezug auf die begleitenden Zeichnungen anhand von bevorzugten Ausführungsformen beispielhaft erläutert. Es zeigen:
- Fig.1: eine perspektivische Darstellung eines Gliedermagneten einer Gliedermagnetschienenbremsvorrichtung als bevorzugte Ausführungsform einer Magnetschienenbremsvorrichtung gemäß der Erfindung;
- Fig.2: eine Seitenansicht eines Endglieds des Magnetspulenkörpers mit mehreren jeweils an einer freien und außen liegenden Oberfläche des Endglieds angeordneten zapfenförmigen Anschlusskörpern gemäß einer nicht erfindungsgemäßen Ausführungsform;
- Fig.3: eine Polklemme, welche mit dem zapfenförmigen Anschlusskörper von Fig.2 verklemmt ist.
- Fig.4: eine Seitenansicht eines Endglieds des Magnetspulenkörpers mit einem an einer freien und außen liegenden Oberfläche des Endglieds angeordneten zapfenförmigen Anschlusskörper gemäß einer bevorzugten Ausführungsform der Erfindung.

### Beschreibung der Ausführungsbeispiele

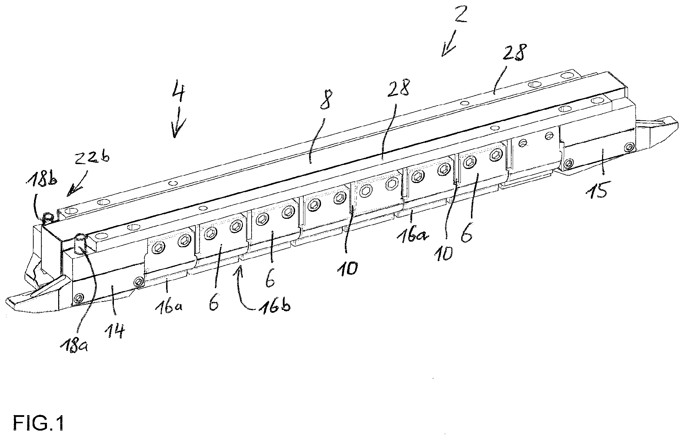

Um sich besser an Unebenheiten einer Schiene 1 eines Gleises anpassen zu können, sind bei einer in **Fig.1** dargestellten Ausführungsform eines Gliedermagneten 2 einer bevorzugt als Gliedermagnetschienenbremsvorrichtung 4 ausgebildeten Magnetschienenbremsvorrichtung mehrere Zwischenglieder 6 vorhanden, welche an einem sich in Längsrichtung der hier nicht gezeigten Schiene erstreckenden Magnetspulenkörper 8 begrenzt beweglich gehalten sind. Dies ist vorzugsweise dadurch gelöst, dass die Zwischenglieder 6 Magnetkerne aufweisen, die symmetrisch zu einer vertikalen Mittelebene an den voneinander weg weisenden Seitenflächen des Magnetspulenkörpers 8 in zwischen Trennwänden 10 gebildeten Kammern begrenzt kipp- bzw. schwenkbar aufgehängt sind. Jeweils endseitig sind an dem Magnetspulenkörper 8 Endglieder 14, 15 angeordnet, ein erstes Endglied 14 und ein zweites Endglied und mit diesem bevorzugt starr verbunden.

In **Fig.1** ist aus Maßstabsgründen lediglich einer der mit einer Schiene zusammen wirkenden Gliedermagnete 2 gezeigt, wobei aber spiegelsymmetrisch in Bezug auf eine senkrechte Längsmittelebene der beiden Schienen des Gleises ein weiterer, hier nicht sichtbarer Gliedermagnet 2 vorhanden ist. Die beiden Gliedermagneten 2 sind dann über hier nicht gezeigte Querstreben miteinander verbunden. Mittels einer hier nicht gezeigten Befestigungsvorrichtung sind die Gliedermagneten 2 an einer Hubvorrichtung befestigt, welche einen vertikalen Hub der Gliedermagneten 2 bewirkt, um die Zwischenglieder 6 in Kontakt mit einem Schienenkopf der jeweiligen Schiene zu bringen. Die Hubvorrichtung ist wiederum an einem Drehgestell des Schienenfahrzeugs gehalten.

Beispielsweise ist an den beiden freien von der Schiene weg weisenden Oberflächen des Magnetspulenkörpers 8 jeweils eine Leiste 28 lösbar befestigt. Dann können die Leisten 28 an der Hubvorrichtung lösbar befestigt sein, durch welche der Gliedermagnet 2 dann vertikal stellbar ist.

Die Übertragung der Bremskräfte auf den Magnetspulenkörper 8 erfolgt dann von der Kontaktstelle der Zwischenglieder 6 über die Trennwände 10 und Endstücke 14, 15, die starr mit dem Magnetspulenkörper 8 verbunden sind und dem Gliedermagnet 2 über Weichen und Schienenstößen eine gute Führung geben. Der Magnetspulenkörper 8, der wenigstens eine von außen nicht sichtbare Magnetspule trägt, trägt folglich die Zwischenglieder 6, welche zusammen einen Magnetkern des Bremsmagneten 2 bilden.

Der Magnetspulenkörper 8 dient zur Aufnahme der zur Erzielung des notwendigen elektromagnetischen Flusses erforderlichen Wicklungen der Magnetspule. In einer Durchgangsöffnung des Magnetspulenkörpers, die oval oder rechteckig ausgeführt sein kann, sind in gleichmäßigen Abständen die Trennwände 10 verteilt und am Magnetspulenkörper 8 in ihren Stellungen fixiert. Zwischen je zwei derartigen Trennwänden 10 werden im Querschnitt hufeisenförmige, den magnetischen Fluss aufnehmende Magnetkerne der Zwischenglieder 6 dann in die Durchgangsöffnung eingesetzt.

Die Endglieder 14, 15 sind starr mit dem Magnetspulenkörper 8 verbunden, beispielsweise durch Verschweißung. Ein Oberzug, ein Unterzug sowie die Endglieder 14, 15 des Magnetspulenkörpers 8 bilden hier beispielsweise jeweils eine U-Profilschiene aus, wobei in einem nutartigen, nach außen hin offenen Wickelraum der U-Profilschiene die Wicklung der Magnetspule umlaufend angeordnet ist.

Auch die hier nicht detailliert gezeigten Magnetkerne der Zwischenglieder 6 weisen in bekannter Weise einen hufeisenförmigen Querschnitt auf, mit einem Steg von welchem zwei Schenkel quer nach unten weg ragen. Dabei ist der Magnetkern zweiteilig ausgebildet, wobei ein erster Teil eine erste Hälfte des Stegs, einen ersten Schenkel und einen ersten Polschuh 16a und ein zweiter, von dem ersten Teil separater Teil eine zweite Hälfte des Stegs, einen zweiten Schenkel und einen zweiten Polschuh 16b umfasst. Die erste Hälfte und die zweite Hälfte des Stegs eines Magnetkerns durchragen dann die Durchgangsöffnung des Magnetspulenkörpers 8 und sind mittels einer beispielsweise horizontalen Schraubverbindung aneinander befestigt.

Die Polschuhe 16a, 16b der Zwischenglieder 6 bestehen bevorzugt aus einem Reibwerkstoffmaterial, z.B. aus Stahl, Sphäroguss oder aus Sinterwerkstoffen. In einem Spalt zwischen den beiden Polschuhen 16a, 16b kann dann ein den Spalt ausfüllender, nicht magnetischer und temperaturbeständiger, hier nicht gezeigter Zwischenkörper angeordnet sein.

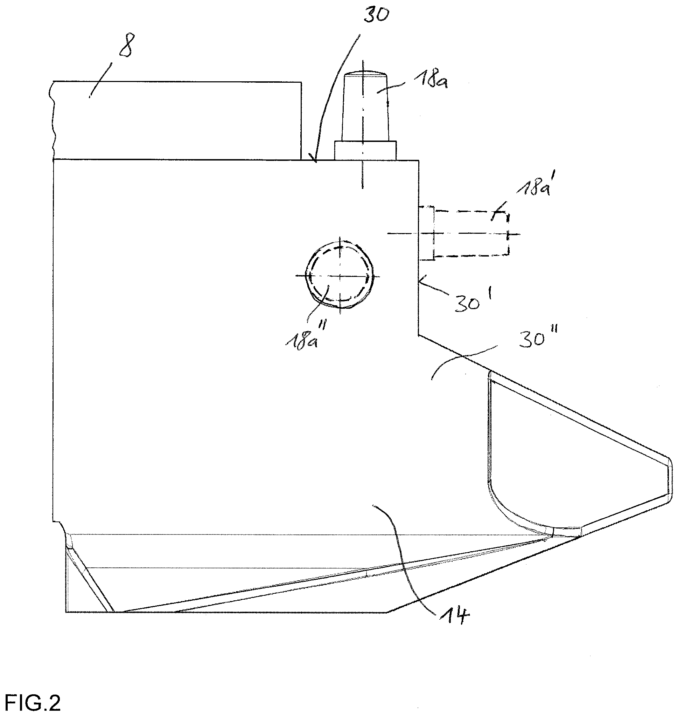

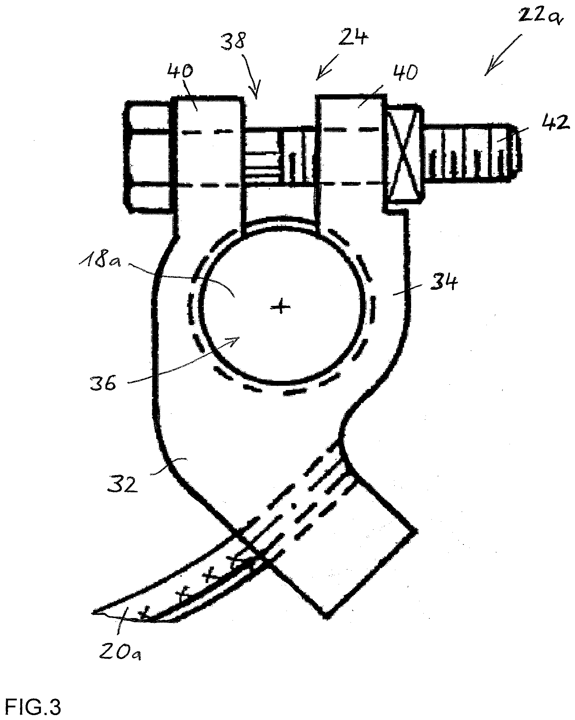

Der nicht erfindungsgemäße Gegenstand der Figuren 2 und 3 wird nachstehend erläutert.

Aus **Fig.1** und **Fig.2** geht hervor, dass beispielsweise an dem ersten Endglied 14 eine elektrische Anschlusseinrichtung 26 angeordnet ist, durch welche die Magnetspule stromversorgt wird.

Die elektrische Anschlusseinrichtung 26 weist hier zwei zapfenförmige elektrische Anschlusskörper 18a, 18b auf, an welche elektrische und stromführendes Kabel 20a, 20b für den Pluspol und für den Minuspol über lösbare Verbindungen 22a, 22b angeschlossen ist. Insgesamt sind daher zwei elektrische Kabel 20a und 20b vorhanden, ein erstes elektrisches Kabel 20a als Pluspol und ein zweites elektrisches Kabel 20b als Minuspol, wobei das den Pluspol repräsentierende erste elektrische Kabel 20a über eine erste lösbare Verbindung 22a an einen ersten zapfenförmigen elektrischen Anschlusskörper 18a und das zweite den Minuspol repräsentierende elektrische Kabel 20b über eine zweite lösbare Verbindung 22b an einen zweiten zapfenförmigen elektrischen Anschlusskörper 18b lösbar anschlossen ist.

Andererseits ist an den beiden zapfenförmigen elektrischen Anschlusskörpern im Inneren des ersten Endglieds 14 jeweils ein hier nicht gezeigtes weiteres elektrisches Kabel angeschlossen, welches andererseits an die Magnetspule 9 angeschlossen ist, um die über das erste elektrische Kabel 50 herangeführte elektrische Energie in die Magnetspule 9 zu leiten.

Die ersten und zweiten zapfenförmigen elektrischen Anschlusskörper 18a, 18b, die ersten und zweiten elektrischen Kabel 20a, 20b sowie die ersten und zweiten elektrischen lösbaren Verbindungen 22a, 22b sind vorzugsweise identisch ausgeführt. Daher gilt die nachfolgende Beschreibung in Bezug zu **Fig.3****,** in welcher lediglich die erste lösbare Verbindung 22a zu sehen ist exemplarisch auch für die zweite lösbare Verbindung 22b der elektrischen Anschlusseinrichtung 26.

Der erste zapfenförmige Anschlusskörper 18a ist an einer freien und außen liegenden sowie beispielsweise von der Schiene weg weisenden Oberfläche 30 beispielsweise des ersten Endglieds 14 angeordnet. Insbesondere befindet sich die freie und außen liegende Oberfläche 30, von welcher der erste zapfenförmige Anschlusskörper 18a nach außen und hier insbesondere in Gebrauchslage gesehen nach oben vertikal weg ragt, außerhalb von etwaigen Ausnehmungen, Bohrungen oder Öffnungen des ersten Endglieds 14.

Der erste zapfenförmige elektrische Anschlusskörper 18a hat beispielsweise einen kreisförmigen Querschnitt und ragt senkrecht von der freien und außen liegenden Oberfläche des ersten Endglieds 14a hier beispielsweise in Gebrauchslage vertikal nach oben weg. Wie in **Fig.2** in gestrichelten Linien gezeichnet, kann die freie und außen liegende Oberfläche 30', aus welcher der erste zapfenförmige elektrische Anschlusskörper 18' hervor ragt aber auch eine Flächennormale aufweisen, welche parallel zur Schiene bzw. zur Längserstreckung des Magnetspulenkörpers 8 verläuft und dann an einer Stirnfläche des ersten Endglieds 14 ausgebildet sein. Weiterhin alternativ kann die freie und außen liegende Oberfläche 30", aus welcher der erste zapfenförmige elektrische Anschlusskörper 18" hervor ragt eine Flächennormale aufweisen, welche senkrecht zur Schiene bzw. zur Längserstreckung des Magnetspulenkörpers 8 verläuft und dann an einer Seitenfläche des ersten Endglieds 14 ausgebildet sein.

Wie aus **Fig.1** hervorgeht sind der erste zapfenförmige Anschlusskörper 18a und der zweite zapfenförmige Anschlusskörper 18b an der äußeren Oberfläche 30 des ersten Endglieds 14 beispielsweise symmetrisch in Bezug auf eine vertikale Längsmittelebene des Magnetspulenkörpers 8 angeordnet.

Wie **Fig.2** zeigt, weist der erste zapfenförmige Anschlusskörper 18a beispielsweise einen kegelstumpfförmigen Querschnitt auf, welcher sich zur freien und außen liegenden Oberfläche 30 des ersten Endglieds 14 hin beispielsweise erweitert.

Wie aus **Fig.3** hervorgeht, kann das erste elektrische Kabel 20a endseitig einen Polkontakt 32 aufweisen, welcher mit dem ersten zapfenförmigen Anschlusskörper 18a durch die erste lösbare Verbindung 22a verbunden ist.

Die erste lösbare Verbindung 22a kann eine formschlüssige und/oder reibschlüssige Verbindung wie eine Verschraubung und/oder eine Verklemmung und/oder eine Verpressung des Polkontakts 32 mit dem ersten zapfenförmigen Anschlusskörper 18a beinhalten. Beispielsweise ist das erste elektrische Kabel 20a endseitig mit einer Polklemme 24 als Polkontakt 32 versehen, welche mit dem ersten zapfenförmigen Anschlusskörper 18a durch eine reinschlüssige Verklemmung verbunden ist.

Wie anhand von **Fig.3** leicht vorstellbar ist, weist die Polklemme 24 einen Ring 34 mit einer Durchgangsöffnung 36 auf, deren Innendurchmesser veränderbar und in einem Ausgangszustand größer als der Außendurchmesser des ersten zapfenförmigen Anschlusskörpers 18a ist. Die ringförmige Polklemme 24 ist dann mit dem ersten zapfenförmigen Anschlusskörper 18a derart verbindbar, dass der erste zapfenförmige Anschlusskörper 18a zunächst in die Durchgangsöffnung 36 des Rings 34 der Polklemme 24 eingesetzt und dann der Innendurchmesser der Durchgangsöffnung 36 des Rings 34 solange reduziert wird, bis der erste zapfenförmige Anschlusskörper 18a in dem Ring 34 der Polklemme 24 reibschlüssig geklemmt ist.

Hierzu kann der Ring in Umfangsrichtung gesehen einen Ringspalt 38 aufweisen, an welchem Ringenden 40 ausgebildet sind, deren Abstand zueinander mittels einer Stellschraube 42 veränderbar ist, um den Innendurchmesser des Rings 34 anzupassen.

Anstatt als hier beschriebene Gliedermagnetschienenbremsvorrichtung 4 kann auch eine Starrmagnetschienenbremsvorrichtung mit einer oben beschriebenen elektrischen Anschlusseinrichtung 26 versehen sein. Weiterhin ist die Anordnung der beiden zapfenförmigen elektrischen Anschlusskörper 18a, 18b nicht auf die hier lediglich als Beispiel herangezogene Oberfläche 30 des ersten Endglieds 14 beschränkt. Mithin ist jede freie äußere Oberfläche an dem Magnetspulenkörper 8 bzw. an einem an diesem befestigten Element denkbar, von welcher dann die beiden zapfenförmigen elektrischen Anschlusskörper 18a, 18b weg ragen.

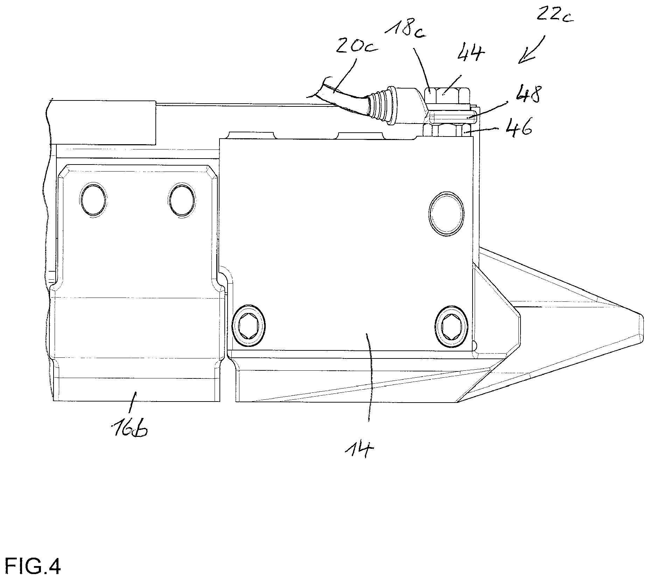

Gemäß der in Fig. 4 dargestellten erfindungsgemäßen Ausführungsform wird der zapfenförmige elektrische Anschlusskörper 18c beispielsweise durch eine Kopfschraube 44 gebildet, welche mit ihrem Schraubenschaft in eine Gewindebohrung einer in Bezug auf den Magnetspulenkörper 8 elektrisch isolierten Gewindebuchse 46 einschraubbar ist, welche in einer Bohrung in der freien und außen liegenden Oberfläche 30 des ersten Endglieds 14 gehalten ist. Die lösbare elektrische Verbindung 22c kommt dann dadurch zustande, dass der Schraubenschaft der Kopfschraube 44 durch einen ringförmigen Kabelschuh 48 ragt, an welchen das stromführende elektrische Kabel 20c elektrisch angeschlossen ist.

Zur Durchführung einer Bremsung werden die beiden Gliedermagneten 2 der Gliedermagnetschienenbremsvorrichtung 4 durch die hier nicht gezeigte Hubvorrichtung auf die Schienen herabgesenkt bis die Polschuhe 16a, 16b der Magnetkerne 7 der Zwischenglieder 6 und der Endglieder 14, 15 den Schienenkopf berühren und die Spulenwicklungen der Magnetspule bestromt, so dass der Stromfluss in den Magnetkernen der Zwischenglieder 6 und der Endglieder 14, 15 einen magnetischen Fluss erzeugt, der durch den Schienenkopf geschlossen wird. Die Polschuhe 16a, 16b werden infolgedessen in einer dem magnetischen Fluss entsprechenden Stärke auf den Schienenkopf herabgezogen und an denselben angepresst. Die in Richtung der Längsachse der Magnetspulenkörper 8 vorhandene Beweglichkeit der Magnetkerne lässt diese auch auf verschieden abgenutzten Schienenköpfen plan aufliegen und den gewünschten magnetischen Fluss sowie über den Reibschluss zwischen den Polschuhen 16a, 16b und dem Schienenkopf dann die Bremskraft zustande kommen. Die Trennwände 10 nehmen die durch die Reibung zwischen den Magnetkernen und dem Schienenkopf 18 entstehenden Bremskräfte auf und leiten sie an den Magnetspulenkörper 8 weiter, von welchem sie auf die Befestigungsvorrichtung und die Hubvorrichtung und von dort auf das Drehgestell des Schienenfahrzeugs übertragen werden.

### BEZUGSZEICHENLISTE

- 2: Gliedermagnet
- 4: Gliedermagnetschienenbremsvorrichtung
- 6: Zwischenglieder
- 8: Magnetspulenkörper
- 10: Trennwände
- 14: erstes Endglied
- 15: zweites Endglied
- 16a/b: Polschuhe
- 18a/b/c: zapfenförmige elektrische Anschlusskörper
- 20a/b/c: elektrische Kabel
- 22a/b/c: lösbare elektrische Verbindungen
- 24: Polklemme
- 26: Anschlusseinrichtung
- 28: Leiste
- 30: Oberfläche
- 32: Polkontakt
- 34: Ring
- 36: Durchgangsöffnung
- 38: Ringspalt
- 40: Ringenden
- 42: Stellschraube
- 44: Kopfschraube
- 46: Gewindebuchse
- 48: Kabelschuh

## Patentansprüche

1. Magnetschienenbremsvorrichtung (4) eines Schienenfahrzeugs mit wenigstens einem Bremsmagneten (2), welcher einen Magnetspulenkörper (8) sowie wenigstens einen Magnetkern aufweist und wobei der Magnetspulenkörper (8) wenigstens eine Magnetspulenwicklung trägt, sowie mit einer elektrischen Anschlusseinrichtung (26), durch welche die wenigstens eine Magnetspulenwicklung (9) stromversorgt wird, wobei die elektrische Anschlusseinrichtung (26) wenigstens einen zapfenförmigen elektrischen Anschlusskörper (18a, 18b; 18c) aufweist, welcher über eine lösbare elektrische Verbindung (22a, 22b; 22c) mit wenigstens einem stromführenden elektrischen Kabel (20a, 20b; 20c) verbunden ist, welches dem wenigstens einen zapfenförmigen Anschlusskörper (18c) in Bezug auf den Bremsmagneten (2) von außen zugeführt ist, wobei der wenigstens eine zapfenförmige Anschlusskörper (18a, 18b; 18c) an einer freien und außen liegenden Oberfläche (30) des Magnetspulenkörpers (8) oder eines mit dem Magnetspulenkörper (8) verbundenen Elements (14, 15) angeordnet ist, **dadurch gekennzeichnet, dass** der wenigstens eine zapfenförmige elektrische Anschlusskörper (18c) durch eine Kopfschraube (44) gebildet wird, welcher in eine Gewindebohrung einer in Bezug auf den Magnetspulenkörper (8) elektrisch isolierten Gewindebuchse (46) einschraubbar ist, welche in einer Bohrung in der freien und außen liegenden Oberfläche (30) gehalten ist, wobei ein Schraubenschaft der Kopfschraube (44) durch einen als Kabelschuh (48) ausgebildeten Polkontakt (32) ragt, an welchen das wenigstens eine stromführende elektrische Kabel (20c) elektrisch angeschlossen ist.

2. Magnetschienenbremsvorrichtung nach Anspruch 1, **dadurch gekennzeichnet, dass** der wenigstens eine zapfenförmige elektrische Anschlusskörper (18a, 18b; 18c) senkrecht von der freien und außen liegenden Oberfläche (30) weg ragt.

3. Magnetschienenbremsvorrichtung nach wenigstens einem der vorhergehenden Ansprüche, **dadurch gekennzeichnet, dass** das wenigstens eine elektrische Kabel (20a, 20b; 20c) endseitig einen Polkontakt (32) aufweist, welcher mit dem wenigstens einen zapfenförmigen elektrischen Anschlusskörper (18a, 18b; 18c) durch die lösbare elektrische Verbindung (22a, 22b; 22c) verbunden ist.

4. Magnetschienenbremsvorrichtung nach einem der vorhergehenden Ansprüche, **dadurch gekennzeichnet, dass** an den Längsenden des Magnetspulenkörpers (8) jeweils ein Endglied (14, 15) starr mit dem Magnetspulenkörper (8) verbunden ist, und dass der wenigstens eine zapfenförmige elektrische Anschlusskörper (18a, 18b; 18c) an einer freien und außen liegenden Oberfläche (30) eines Endglieds (14) angeordnet ist.

5. Magnetschienenbremsvorrichtung nach einem der vorhergehenden Ansprüche, **dadurch gekennzeichnet, dass** ein erstes elektrisches Kabel (20a) als Pluspol und ein zweites elektrisches Kabel (20b) als Minuspol vorgesehen sind, wobei das den Pluspol repräsentierende erste elektrische Kabel (20a) über eine erste lösbare elektrische Verbindung (22a) an einen ersten zapfenförmigen elektrischen Anschlusskörper (18a) und das zweite den Minuspol repräsentierende elektrische Kabel (20b) über eine zweite lösbare elektrische Verbindung (22b) an einen zweiten zapfenförmigen elektrischen Anschlusskörper (18b) lösbar anschlossen sind.

6. Magnetschienenbremsvorrichtung nach Anspruch 5, **dadurch gekennzeichnet, dass** der erste zapfenförmige Anschlusskörper (18a) und der zweite zapfenförmige elektrische Anschlusskörper (18b) an der freien und außen liegenden Oberfläche (30) symmetrisch in Bezug auf eine vertikale Längsmittelebene des Magnetspulenkörpers (8) angeordnet sind.

7. Magnetschienenbremsvorrichtung nach einem der vorhergehenden Ansprüche, **dadurch gekennzeichnet, dass** die freie und außen liegende Oberfläche (30) eine Flächennormale aufweist, welche in Gebrauchslage des Bremsmagneten (2) vertikal nach oben oder nach unten oder zur Seite weist.

8. Magnetschienenbremsvorrichtung nach einem der vorhergehenden Ansprüche, **dadurch gekennzeichnet, dass** sie eine Starrmagnetschienenbremsvorrichtung oder eine Gliedermagnetschienenbremsvorrichtung ist.

9. Schienenfahrzeug mit wenigstens einer Magnetschienenbremsvorrichtung nach wenigstens einem der vorhergehenden Ansprüche.

## Claims

1. Magnetic rail brake device (4) of a rail vehicle having at least one brake magnet (2) which has a magnetic coil body (8) and at least one magnetic core, and wherein the magnetic coil body (8) carries at least one magnetic core winding, and having an electric connecting device (26) through which the at least one magnetic coil winding (9) is supplied with power, wherein the electric connecting device (26) has at least one pin-shaped electric connecting body (18a, 18b; 18c) which is connected via a releasable electric connection (22a, 22b; 22c) to at least one current-conducting electric cable (20a, 20b; 20c) which is led into the at least one pin-shaped connector body (18c) from the outside with respect to the brake magnet (2), wherein the at least one pin-shaped connector body (18a, 18b; 18c) is arranged on a free and outer surface (30) of the magnetic coil body (8) or of an element (14, 15) which is connected to the magnetic coil body (8), **characterised in that** the at least one pin-shaped electric connector body (18c) is formed by a head screw (44) which can be screwed into a threaded bore of a threaded bushing (46) which is electrically insulated with respect to the magnetic coil body (8) and is secured in a drilled hole in the free and outer surface (30), wherein a screw shank of the head screw (44) projects through a pole contact (32) which is embodied as a cable lug (48) and to which the at least one current-conducting electric cable (20c) is electrically connected.

2. Magnetic rail brake device according to claim 1, **characterised in that** the at least one pin-shaped electric connector body (18a, 18b; 18c) projects away perpendicularly from the free and outer surface (30).

3. Magnetic rail brake device according to one or more of the preceding claims, **characterised in that** the at least one electric cable (20a, 20b; 20c) has at the end a pole contact (32) which is connected to the at least one pin-shaped electric connector body (18a, 18b; 18c) by the releasable electric connection (22a, 22b; 22c).

4. Magnetic rail brake device according to any of the preceding claims, **characterised in that** an end element (14, 15) is rigidly connected to the magnetic coil body (8) at each of the longitudinal ends of the magnetic coil body (8), and **in that** the at least one pin-shaped electric connector body (18a, 18b; 18c) is arranged on a free and outer surface (30) of an end element (14).

5. Magnetic rail brake device according to any of the preceding claims, **characterised in that** a first electric cable (20a) is provided as a positive pole and a second electric cable (20b) is provided as a negative pole, wherein the first electric cable (20a) which represents the positive pole is releasably connected to a first pin-shaped electric connector body (18a) via a first releasable electric connection (22a), and the second electric cable (20b) which represents the negative pole is releasably connected to a second pin-shaped electric connector body (18b) via a second releasable electric connection (22b).

6. Magnetic rail brake device according to claim 5, **characterised in that** the first pin-shaped connector body (18a) and the second pin-shaped electric connector body (18b) are arranged on the free and outer surface (30) in a symmetrical fashion with respect to a vertical longitudinal center plane of the magnetic coil body (8).

7. Magnetic rail brake device according to any of the preceding claims, **characterised in that** the free and outer surface (30) has a surface normal which points vertically upward or downward or to the side in the position of use of the brake magnet (2).

8. Magnetic rail brake device according to any of the preceding claims, **characterised in that** it is a rigid magnetic rail brake device or an articulated magnetic rail brake device.

9. Rail vehicle having at least one magnetic rail brake device according to one or more of the preceding claims.

## Revendications

1. Dispositif (4) de freinage électromagnétique sur rail d'un véhicule ferroviaire comprenant au moins un aimant (2) de freinage, qui a un corps (8) de bobine d'électroaimant ainsi qu'au moins un noyau magnétique et dans lequel le corps (8) de bobine d'électroaimant porte au moins un enroulement de bobine d'électroaimant ainsi qu'un dispositif (26) de connexion électrique, par lequel le au moins un enroulement (9) de bobine d'électroaimant est alimenté en courant, dans lequel le dispositif (26) de connexion électrique a au moins un corps (18a, 18b ; 18c) de connexion électrique en forme de tenon, qui est relié par une liaison (22a, 22b ; 22c) électrique amovible à au moins un câble (20a, 20b ; 20c) électrique conduisant le courant, qui est amené vers l'extérieur par rapport à l'aimant (2) de freinage au au moins un corps (18c) de connexion en forme de tenon, dans lequel le au moins un corps (18a, 18b ; 18c) de connexion en forme de tenon est disposé sur une surface (30) libre et se trouvant vers l'extérieur du corps (8) de bobine d'électroaimant ou d'un élément (14, 15) relié au corps (8) de bobine d'électroaimant, **caractérisé en ce que** le au moins un corps (18c) de connexion électrique en forme de tenon est formé d'une vis (44) à tête, qui peut être vissée dans un taraudage d'une douille (46) taraudée isolée électriquement par rapport au corps (8) de bobine d'électroaimant, douille qui est retenue dans un trou de la surface (30) libre et se trouvant vers l'extérieur, dans lequel une tige de la vis (44) à tête pénètre dans un contact (32) polaire constitué sous la forme d'une cosse (48) de câble, auquel le au moins un câble (20c) électrique portant le courant est connecté électriquement.

2. Dispositif de freinage électromagnétique sur rail suivant la revendication 1, **caractérisé en ce que** le au moins un corps (18a, 18b ; 18c) de connexion électrique en forme de tenon fait saillie perpendiculairement de la surface (30) libre et se trouvant vers l'extérieur.

3. Dispositif de freinage électromagnétique sur rail suivant au moins l'une des revendications précédentes, **caractérisé en ce que** le au moins un câble (20a, 20b ; 20c) électrique a, du côté de l'extrémité, un contact (32) polaire, qui est relié au au moins un corps (18a, 18b ; 18c) de connexion électrique en forme de tenon par la liaison (22a, 22b ; 22c) électrique amovible.

4. Dispositif de freinage électromagnétique sur rail suivant l'une des revendications précédentes, **caractérisé en ce que**, aux extrémités longitudinales du corps (8) de bobine d'électroaimant, respectivement un organe (14, 15) d'extrémité est relié rigidement au corps (8) de bobine d'électroaimant et **en ce que** le au moins un corps (18a, 18b ; 18c) de connexion électrique en forme de tenon est disposé sur une surface (30) libre et se trouvant vers l'extérieur d'un organe (14) d'extrémité.

5. Dispositif de freinage électromagnétique sur rail suivant une des revendications précédentes, **caractérisé en ce qu'**un premier câble (20a) électrique est prévu comme pôle positif et un deuxième câble (20b) électrique comme pôle négatif, dans lequel le premier câble (20a) électrique représentant le pôle positif est connecté de manière amovible à un premier corps (18a) de connexion électrique en forme de tenon et le deuxième câble (20) électrique représentant le pôle négatif est relié par une première liaison (22a) électrique amovible à un premier corps (18a) de connexion électrique en forme de tenon et le deuxième câble (20b) représentant le pôle négatif est relié de manière amovible par une deuxième liaison (22b) électrique amovible à un deuxième corps (18b) de connexion électrique en forme de tenon.

6. Dispositif de freinage électromagnétique sur rail suivant la revendication 5, **caractérisé en ce que** le premier corps (18a) de connexion en forme de tenon et le deuxième corps (18b) électrique en forme de tenon sont disposés sur la surface (30) libre et se trouvant vers l'extérieur symétriquement par rapport à un plan médian longitudinal vertical du corps (8) de bobine d'électroaimant.

7. Dispositif de freinage électromagnétique sur rail suivant l'une des revendications précédentes, **caractérisé en ce que** la surface (30) libre et se trouvant à l'extérieur a une normale à la surface qui, dans la position d'utilisation de l'aimant (2) de frein, est tournée verticalement vers le haut ou vers le bas ou vers le côté.

8. Dispositif de freinage électromagnétique sur rail suivant l'une des revendications précédentes, **caractérisé en ce que** c'est un dispositif de freinage sur rail à aimant rigide ou un dispositif sur rail à aimant articulé.

9. Véhicule ferroviaire ayant au moins un dispositif de freinage électromagnétique sur rail suivant au moins l'une des revendications précédentes.
